# EUROPÄISCHE PATENTANMELDUNG

(11) **EP 2 862 617 A1**
(43) Veröffentlichungstag der Anmeldung: **22.04.2015**
(21) Anmeldenummer: 14183949.8
(22) Anmeldetag: 08.09.2014
(51) Int. Cl.: B01D 46/24, B01D 46/52

(54) **Rückspülbares Staubfilterelement**

(30) Priorität: 18.09.2013 DE 102013218730
(71) Anmelder: Mahle International GmbH, 70376 Stuttgart (DE)
(72) Erfinder: Gaugler, Thomas, 74613 Öhringen (DE); Knamdel, Thomas, 74613 Öhringen (DE); Reinhardt, Alexander, 74626 Bretzfeld (DE); Steiner, Gerhard, 74613 Öhringen (DE)
(74) Vertreter: BRP Renaud & Partner mbB Rechtsanwälte Patentanwälte Steuerberater

(57) **Zusammenfassung**

Die vorliegende Erfindung betrifft ein rückspülbares Staubfilterelement (1) zum Entfernen fester Verunreinigungen aus einer Gasströmung, mit einem ringförmigen Filterkörper (2) aus einem gefalteten Filtermaterial (3), mit einer Innenzarge (4), an der sich der Filterkörper (2) zumindest während eines Filtrierbetriebs radial innen abstützt, und mit zwei Endscheiben (5, 6), die an den axialen Enden des Filterkörpers (2) angeordnet sind.

Eine längere Lebensdauer wir erreicht mit wenigstens einer schraubenförmigen Feder (8), die radial außen am Filterkörper (2) angeordnet ist, die sich von der einen Endscheibe (5) bis zur anderen Endscheibe (6) erstreckt und an der sich der Filterkörper (2) zumindest während eines Rückspülbetriebs zum Reinigen des Filterelements (1) radial außen abstützt.

## Beschreibung

Die vorliegende Erfindung betrifft ein rückspülbares Staubfilterelement zum Entfernen fester Verunreinigungen aus einer Gasströmung, mit den Merkmalen des Oberbegriffs des Anspruchs 1.

Aus der DE 42 11 752 C2 ist ein derartiges Staubfilterelement bekannt, das sich durch einen ringförmigen Filterkörper aus einem gefalteten Filtermaterial auszeichnet. Das Filterelement ist ferner mit einer Innenzarge ausgestattet, an der sich der Filterkörper zumindest während eines Filtrierbetriebs radial innen abstützt. Des Weiteren sind zwei Endscheiben vorgesehen, die an den axialen Enden des Filterkörpers angeordnet sind.

Ein derartiges Staubfilterelement ist für eine kontinuierliche Betriebsweise vorgesehen, wobei außerdem eine vertikale Anordnung für das Filterelement in einer Filtereinrichtung bevorzugt ist. Während eines Filtrierbetriebs wird der Filterkörper des Filterelements radial von außen nach innen durchströmt. Durch den damit einhergehenden Durchströmungswiderstand wird der Filterkörper radial nach innen gedrückt. Um hierbei eine Beschädigung des Filtermaterials zu vermeiden, kann sich der Filterkörper radial innen an der Innenzarge abstützen. Das jeweilige Filterelement wird bei kontinuierlicher Betriebsweise periodisch oder bedarfsabhängig mittels einer Rückspülung regeneriert. Die Rückspülung erfolgt dabei mit gereinigtem Gas, das hierzu den Filterkörper radial von innen nach außen durchströmt. Die Rückspülung kann dabei unter erhöhtem Druck und insbesondere impulsartig erfolgen. Während des Rückspülvorgangs wird somit das Filtermaterial radial nach außen gedrückt.

Das aus DE 42 11 752 C2 bekannte Filterelement weist zwischen den Endscheiben mehrere Stützringe auf, die radial außen am Filterkörper angeordnet sind und sich dabei jeweils in der Umfangsrichtung geschlossen erstrecken. An diesen Stützringen kann sich das Filtermaterial beim Rückspülen radial außen abstützen. Zur Lagefixierung der Stützringe sind diese auf geeignete Weise am Filterkörper befestigt, beispielsweise mittels Verklebung.

Durch eine derartige Fixierung der Stützringe am Filterkörper ist auch das Filtermaterial im Bereich des jeweiligen Stützrings am Stützring fixiert, so dass Relativbewegungen zwischen außenliegenden Faltkanten des Filtermaterials und dem Stützring weitgehend unterbunden sind. Hierdurch werden die außenliegenden Faltkanten jedoch beim Rückspülen extrem belastet, was lokal zu einem erhöhten Verschleiß führen kann.

Aus der DE 10 2004 063 346 A1 ist ein Filterelement mit einem ringförmigen Filterkörper bekannt, an dem ebenfalls zwei Endscheiben sowie eine Innenzarge vorhanden sind. Bei diesem Filterelement ist die Innenzarge durch einen schraubenförmigen Körper gebildet. Hierbei wird der Vorteil erreicht, dass die Innenzarge quasi endlos hergestellt werden kann und bedarfsabhängig abgelängt werden kann, wobei axiale Maßabweichungen durch Herstellungstoleranzen durch die axiale Federwirkung der schraubenförmigen Innenzarge einfach ausgeglichen werden können.

Aus der DE 10 2011 081 143 A1 ist ein Kraftstofffilterelement bekannt, das einen ringförmigen Filterkörper mit zwei Endscheiben aufweist. Radial außen ist am Filterkörper ein spiralförmiger Erdungsleiter angeordnet, um das Filterelement vor einer elektrostatischen Aufladung zu schützen.

Die vorliegende Erfindung beschäftigt sich mit dem Problem, für ein rückspülbares Staubfilterelement der eingangs genannten Art eine verbesserte Ausführungsform anzugeben, die sich insbesondere durch eine längere Haltbarkeit bzw. durch einen reduzierten Verschleiß auszeichnet.

Dieses Problem wird erfindungsgemäß durch den Gegenstand des unabhängigen Anspruchs gelöst. Vorteilhafte Ausführungsformen sind Gegenstand der abhängigen Ansprüche.

Die Erfindung beruht auf dem allgemeinen Gedanken, radial außen am Filterkörper zumindest eine schraubenförmige Feder anzuordnen, derart, dass sich der Filterkörper zumindest während eines Rückspülbetriebs, der zum Reinigen des Filterelements durchgeführt wird, radial außen an der Feder abstützen kann. Hierdurch wird die Belastung des Filtermaterials während des Rückspülbetriebs reduziert, da ein wesentlicher Anteil der nach außen wirkenden Druckkräfte durch die Feder elastisch aufgenommen werden kann. Die elastische Abstützung des Filterkörpers an der schraubenförmigen Feder zeichnet sich dabei gegenüber einer herkömmlichen, starren Abstützung durch einen reduzierten Verschleiß aus.

Die jeweilige schraubenförmige Feder erstreckt sich dabei gemäß einer vorteilhaften Ausführungsform von der einen Endscheibe bis zur anderen Endscheibe, wodurch es insbesondere möglich ist, die Feder axial an den Endscheiben abzustützen und/oder die Feder an den Endscheiben zu fixieren. Sofern sich die Feder somit über die gesamte axiale Länge des Filterkörpers erstreckt, ergibt sich eine besonders effiziente Abstützung des Filterkörpers, da die auftretenden radialen Kräfte während des Rückspülbetriebs quasi über die gesamte axiale Länge des Filterkörpers von der Feder aufgenommen werden können.

Gemäß einer besonders vorteilhaften Ausführungsform kann die Feder lose am Filterkörper anliegen. Das bedeutet, dass sich der Filterkörper relativ zur Feder bewegen kann. Insbesondere können sich außenliegende Faltkanten des gefalteten Filtermaterials relativ zur Feder bewegen, so dass hier mechanische Spannungen vermieden und damit einhergehender Verschleiß reduziert werden können.

Vorteilhaft ist die Feder aus Federstahl gebildet oder mit einem Federstahlkern ausgestattet. Hierdurch besitzt die Feder bei geringen Dimensionen hohe Abstützkräfte und eine hohe Federelastizität.

Gemäß einer anderen vorteilhaften Ausführungsform kann die Feder einen Federkern und eine den Federkern umhüllende Hülle aus einem Kunststoff aufweisen. Durch die Kunststoffhülle kann die Feder tribologisch an das Filtermaterial angepasst werden, um Verschleiß durch Reibung und dergleichen zu reduzieren. Ferner ist die Kunststoffhülle signifikant weicher als der Federkern, der bevorzugt aus Federstahl besteht, was ebenfalls die Gefahr von Beschädigungen reduziert. Schließlich kann durch die Hülle eine Kontaktfläche zwischen Feder und Filtermaterial vergrößert werden, was die Flächenpressung reduziert und ebenfalls die Gefahr von Beschädigungen verringert.

Die Feder kann einen ebenen und/oder flachen oder einen runden, z.B. ovalen oder kreisförmigen, Querschnitt aufweisen. Flache Querschnitte, vorzugsweise mit zwei parallel zueinander verlaufenden ebenen bzw. geradlinigen Außenseiten, zeichnen sich in besonderer Weise durch vergrößerte Kontaktflächen und damit einhergehend durch reduzierte Flächenpressungen und somit durch reduzierten Verschleiß aus. Denkbar ist beispielsweise ein annähernd rechteckiger Querschnitt. Grundsätzlich reicht es jedoch aus, wenn der Querschnitt lediglich an seiner am Filtermaterial anliegenden Seite eben bzw. geradlinig ausgestaltet ist oder zumindest einen ebenen bzw. geradlinigen Abschnitt aufweist.

Die Feder kann radial vorgespannt am Filterkörper anliegen. Hierzu kann die Feder beispielsweise so hergestellt sein, dass sie im Neutralzustand einen offenen Innenquerschnitt aufweist, der geringfügig kleiner ist als der Außenquerschnitt des Filterkörpers. Dementsprechend muss die Feder radial aufgeweitet werden, um sie außen am Filterkörper anzubringen. Mit der radialen Aufweitung geht aufgrund der Federwirkung eine radial wirkende Rückstellkraft einher, welche die Feder radial vorgespannt am Filterkörper zur Anlage bringt. Alternativ lässt sich eine derartige radiale Vorspannung auch dadurch erzeugen, dass die schraubenförmige Feder aus ihrer Neutrallage heraus geringfügig verwunden wird, also durch Drehen des einen Federendes in Umfangsrichtung relativ zum anderen Federende. Eine derartige vorgespannte Anlage zwischen Feder und Filterkörper eliminiert gleichzeitig jegliches Radialspiel zwischen Filterkörper und Feder, was zur Reduzierung von Verschleiß beiträgt.

Zur Lagefixierung der Feder relativ zum Filterkörper kann die Feder mit wenigstens einem ihrer Enden an der jeweils zugewandten Endscheibe befestigt sein. Zweckmäßig sind beide Enden der Feder an je einer Endscheibe fixiert.

Bei einer anderen Ausführungsform kann die Innenzarge die beiden Endscheiben axial aneinander abstützen und/oder axial aneinander befestigen. Das bedeutet, dass die Innenzarge bei einer reinen Abstützung Druckkräfte und bei einer Befestigung Druck- und Zugkräfte aufnehmen kann, die auf die Endscheiben einwirken. Somit kann die Innenzarge den Filterkörper von derartigen axial wirkenden Druck- bzw. Zugkräften weitgehend entlasten. Druck- und Zugkräfte können beim normalen Betrieb entstehen, nämlich Druckkräfte beim Filtrierbetrieb, wenn das Filterelement von außen nach innen durchströmt wird, und Zugkräfte beim Rückspülbetrieb, wenn das Filterelement von innen nach außen durchströmt wird. Die Innenzarge kann in üblicher Weise durch ein perforiertes Rohr oder durch eine Gitterstruktur gebildet sein.

Gemäß einer anderen vorteilhaften Ausführungsform können der Filterkörper und die Feder und vorzugsweise auch die Innenzarge zylindrisch ausgestaltet sein. Hierdurch lässt sich das Filterelement besonders einfach und preiswert herstellen.

Bevorzugt ist jedoch eine andere Ausführungsform, bei welcher der Filterkörper und die Feder und insbesondere auch die Innenzarge konisch ausgestaltet sind. Es hat sich gezeigt, dass derartige konische Filterelemente vorteilhaft sind, wenn die Filterelemente eine vergleichsweise große axiale Länge aufweisen, die beispielsweise mindestens fünfmal größer als der Durchmesser der größeren Endscheibe sein kann, und wenn die Filterelemente im Betrieb vertikal, also mit vertikal orientierter Längsmittelachse angeordnet sind. Die konische Feder ist in einer axialen Blickrichtung außerdem spiralförmig.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch,
- Fig. 1: eine isometrische Ansicht eines Filterelements,
- Fig. 2: ein Querschnitt des Filterelements,
- Fig. 3: eine geschnittene Seitenansicht des Filterelements gemäß Schnittlinien III in Fig. 2.

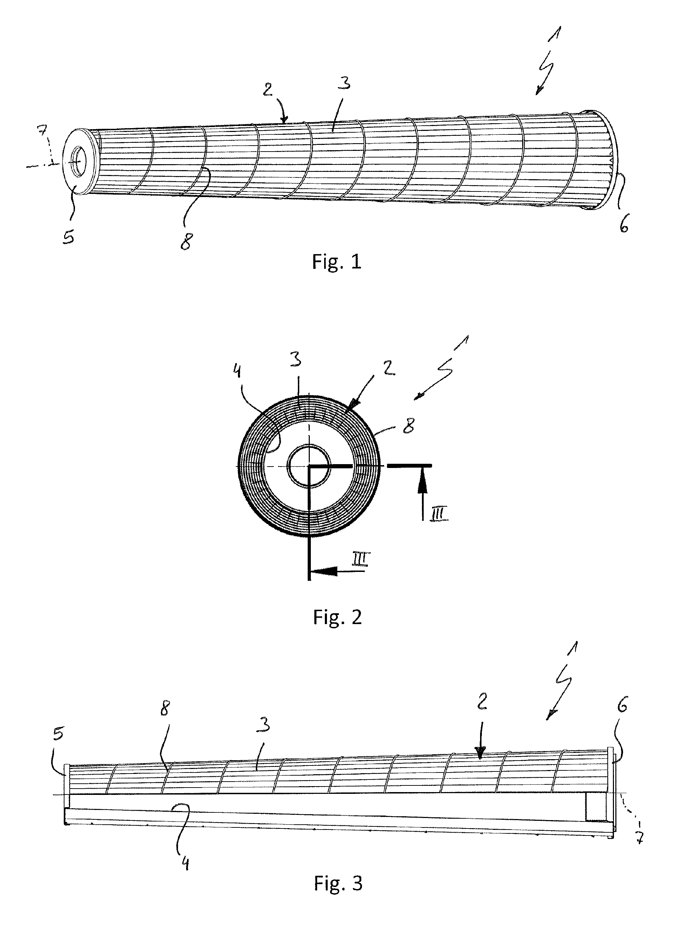

Entsprechend den Figuren 1-3 umfasst ein Staubfilterelement 1 einen ringförmigen Filterkörper 2 aus einem gefalteten Filtermaterial 3, eine Innenzarge 4 und zwei Endscheiben 5, 6. Das Staubfilterelement 1 ist für eine kontinuierliche Betriebsweise vorgesehen, bei der ein Filtrierbetrieb vorübergehend von einem Rückspülbetrieb unterbrochen wird. Während des Filtrierbetriebs durchströmt eine mit Verunreinigungen beladene Gasströmung den Filterkörper 2 von radial außen nach innen, wobei die in der Gasströmung mitgeführten Verunreinigungen im Filtermaterial abgefangen werden, wodurch letztlich zumindest die festen Verunreinigungen aus der Gasströmung entfernt werden. Die Verunreinigungen lagern sich dabei weitgehend außen am Filterkörper 2 an. Während des Rückspülbetriebs wird das Filterelement 1 mehr oder weniger gereinigt. Hierzu wird gereinigtes Gas in der entgegengesetzten Strömungsrichtung, also von radial innen nach außen durch den Filterkörper 2 hindurchgeführt, vorzugsweise in Form eines Druckstoßes. Hierbei werden die außen am Filtermaterial 3 angelagerten Verunreinigungen weitgehend abgestoßen.

Im Betrieb ist das Filterelement 1 zweckmäßig vertikal ausgerichtet, so dass eine Längsmittelachse 7 des Filterelements 1 vertikal im Raum angeordnet ist. Die Längsmittelachse 7 definiert dabei eine Axialrichtung des Filterelements 1 und dient als Bezug für eine Radialrichtung und für eine Umfangsrichtung.

Die Innenzarge 4 ist so dimensioniert und angeordnet, dass sich der Filterkörper 2 radial innen zumindest während des Filtrierbetriebs an der Innenzarge 4 abstützen kann. Die beiden Endscheiben 5, 6 sind an den axialen Enden des Filterkörpers 2 angeordnet. Zweckmäßig sind die Endscheiben 5, 6 fest mit den axialen Enden des Filterkörpers 2 verbunden und bilden dort gleichzeitig eine Abdichtung des Filtermaterials 3.

Das hier vorgestellte Staubfilterelement 1 weist außerdem zumindest eine schraubenförmige Feder 8 auf. Die Feder 8 ist radial außen am Filterkörper 2 angeordnet und erstreckt sich von der einen Endscheibe 5 bis zur anderen Endscheibe 6. Die Feder 8 ist dabei so dimensioniert und angeordnet, dass sich der Filterkörper 2 zumindest während des Rückspülbetriebs radial außen an der Feder 8 abstützen kann.

Bei der hier gezeigten, bevorzugten Ausführungsform weist das Staubfilterelement 1 nur eine einzige derartige Feder 8 auf. Grundsätzlich ist auch eine Ausführungsform denkbar, bei der zwei oder mehr derartige Federn 8 vorhanden sind. Diese können dann axial ineinander angeordnet sein, insbesondere nach Art einer Doppel-Helix oder Mehrfach-Helix. Auch ist denkbar, die Feder 8 in der Axialrichtung mehrteilig auszugestalten. Bevorzugt ist jedoch eine einstückige bzw. aus einem Stück hergestellte Feder 8, die sich durchgehend von der einen Endscheibe 5 bis zur anderen Endscheibe 6 erstreckt.

Die Feder 8 liegt am Filterkörper 2 zweckmäßig lose an, ist daran also nicht befestigt.

Die Feder 8 besteht zweckmäßig aus einem Federstahl oder besitzt einen Federkern aus Federstahl. Insbesondere kann die Feder 8 einen Federkern sowie eine den Federkern umhüllende Hülle aufweisen. Während der Federkern zweckmäßig aus einem Federstahl besteht, kann die Hülle bevorzugt aus einem Kunststoff hergestellt sein. Hierdurch kann beispielsweise eine Verletzung des Filtermaterials 3 durch die Feder 8 weitgehend vermieden werden.

Die Feder 8 kann bevorzugt einen flachen Querschnitt aufweisen, wobei sich die jeweilige flache Seite dann parallel zur Außenkontur des Filterkörpers 2 erstreckt. Hierdurch kann die Feder 8 vergleichsweise großflächig am Filterkörper 2 zur Anlage kommen. Alternativ kann die Feder 8 auch einen kreisförmigen oder einen anderen runden Querschnitt aufweisen.

Des Weiteren kann die Feder 8 mit ihren Enden an den beiden Endscheiben 5, 6 befestigt sein. Hierdurch wird eine eindeutige Lagepositionierung zwischen der Feder 8 und dem Filterkörper 2 realisiert.

Zweckmäßig kann die Feder 8 radial vorgespannt am Filterkörper 2 anliegen. Hierzu kann die Feder 8 beim Einsetzen des Filterkörpers 2 aufgeweitet werden. Ebenso ist es möglich, die Feder 8 durch Verwinden elastisch zu verformen, derart, dass sich ihr Innenquerschnitt reduziert. Somit lässt sich auf mehrfache Weise die radiale Vorspannung zwischen Feder 8 und Filterkörper 2 realisieren.

Die Innenzarge 4 ist zweckmäßig so ausgestaltet, dass sie die beiden Endscheiben 5, 6 im Inneren des Filterelements 1 axial aneinander abstützt und/oder aneinander befestigt. Bevorzugt ist die Innenzarge 4 fest mit beiden Endscheiben 5, 6 verbunden. Hierdurch können an den Endscheiben 5, 6 angreifende Druckkräfte und Zugkräfte zumindest teilweise und vorzugsweise weitgehend über die Innenzarge 4 zwischen den Endscheiben 5, 6 übertragen werden, wodurch der Filterkörper 2 zumindest teilweise und insbesondere weitgehend von diesen Druckund Zugkräften entlastet ist. Eine hierfür geeignete Innenzarge 4 ist beispielsweise durch ein perforiertes Rohr oder durch eine Gitterstruktur gebildet.

Bei der hier gezeigten Ausführungsform sind der Filterkörper 2 und die Feder 8 sowie außerdem die Innenzarge 4 konisch ausgestaltet. Dementsprechend besitzt die eine, in den Figuren 1 und 3 links dargestellte Endscheibe 5 einen kleineren Außenquerschnitt als die in den Figuren 1 und 3 rechts dargestellte andere Endscheibe 6.

Bei einer anderen Ausführungsform kann vorgesehen sein, den Filterkörper 2 und die Feder 8 sowie außerdem die Innenzarge 4 zylindrisch auszugestalten.

## Patentansprüche

1. Rückspülbares Staubfilterelement zum Entfernen fester Verunreinigungen aus einer Gasströmung,
- mit einem ringförmigen Filterkörper (2) aus einem gefalteten Filtermaterial (3),
- mit einer Innenzarge (4), an der sich der Filterkörper (2) zumindest während eines Filtrierbetriebs radial innen abstützt,
- mit zwei Endscheiben (5, 6), die an den axialen Enden des Filterkörpers (2) angeordnet sind,
**gekennzeichnet durch**
wenigstens eine schraubenförmige Feder (8), die radial außen am Filterkörper (2) angeordnet ist, die sich von der einen Endscheibe (5) bis zur anderen Endscheibe (6) erstreckt und an der sich der Filterkörper (2) zumindest während eines Rückspülbetriebs zum Reinigen des Filterelements (1) radial außen abstützt.

2. Filterelement nach Anspruch 1,
**dadurch gekennzeichnet,**
**dass** die Feder (8) lose am Filterkörper (2) anliegt.

3. Filterelement nach Anspruch 1 oder 2,
**dadurch gekennzeichnet,**
**dass** die Feder (8) aus Federstahl besteht oder einen Federstahlkern aufweist.

4. Filterelement nach einem der Ansprüche 1 bis 3,
**dadurch gekennzeichnet,**
**dass** die Feder (8) einen Federkern und eine den Federkern umhüllende Hülle aus Kunststoff aufweist.

5. Filterelement nach einem der Ansprüche 1 bis 4,
**dadurch gekennzeichnet,**
**dass** die Feder (8) einen flachen oder runden Querschnitt aufweist.

6. Filterelement nach einem der Ansprüche 1 bis 5,
**dadurch gekennzeichnet,**
**dass** die Feder (8) mit ihren Enden an den Endscheiben (5, 6) befestigt ist.

7. Filterelement nach einem der Ansprüche 1 bis 6,
**dadurch gekennzeichnet,**
**dass** die Feder (8) radial vorgespannt am Filterkörper (2) anliegt.

8. Filterelement nach einem der Ansprüche 1 bis 7,
**dadurch gekennzeichnet,**
**dass** die Innenzarge (4) die beiden Endscheiben (5, 6) axial aneinander abstützt und/oder an beiden Endscheiben (5, 6) befestigt ist.

9. Filterelement nach einem der Ansprüche 1 bis 8,
**dadurch gekennzeichnet,**
**dass** der Filterkörper (2) und die Feder (8) zylindrisch sind.

10. Filterelement nach einem der Ansprüche 1 bis 8,
**dadurch gekennzeichnet,**
**dass** der Filterkörper (2) und die Feder (8) konisch sind.
